Europäisches Patentamt

European Patent Office

Office européen des brevets

(11) Veröffentlichungsnummer: **0 167 104**

**A1**

## (12) EUROPÄISCHE PATENTANMELDUNG

(21) Anmeldenummer: 85107909.5

(22) Anmeldetag: 26.06.85

(51) Int. Cl.⁴: **A 01 D 34/00**
A 01 D 34/24, A 01 D 34/60

(30) Priorität: 28.06.84 DE 3423892

(43) Veröffentlichungstag der Anmeldung:
08.01.86 Patentblatt 86/2

(84) Benannte Vertragsstaaten:
AT BE CH DE FR GB IT LI NL SE

(71) Anmelder: Hartmann, Hans Peter

D-8459 Lehendorf 19(DE)

(72) Erfinder: Hartmann, Hans Peter

D-8459 Lehendorf 19(DE)

(74) Vertreter: Kador . Klunker . Schmitt-Nilson . Hirsch
Corneliusstrasse 15
D-8000 München 5(DE)

(54) Anbau-Frontmähwerk für Schlepper.

(57) Anbau-Frontmähwerk für Schlepper, das eine Anbaueinheit zur Anbringung am Schlepper sowie ein aus einer Arbeitsstellung in eine im wesentlichen aufrechte Fahrstellung verschwenkbares Schneidwerk aufweist, dadurch gekennzeichnet, daß ein Tragarm (6) der Anbaueinheit (2), an dessen freiem Ende das Schneidwerk (4) um eine im wesentlichen horizontale, in Mähfortschrittsrichtung weisende Achse verschwenkbar angebracht ist, ein Gelenk (48) mit im wesentlichen vertikaler Gelenkachse aufweist; und daß der schneidwerkseitig von dem Gelenk liegende Teil des Tragarms (6) derart um die Gelenkachse (40) nach hinten schwenkbar ist, daß das im wesentlichen aufrechte Schneidwerk (4) in eine Fahrstellung seitlich am Schlepper (10) zwischen dessen Vorder- und Hinterachse kommt.

./...

EP 0 167 104 A1

FIG. 1

Anbau-Frontmähwerk für Schlepper       **0167104**

Die Erfindung bezieht sich auf ein Anbau-Frontmähwerk für
Schlepper, das eine Anbaueinheit zur Anbringung am Schlepper sowie ein aus einer Arbeitsstellung in eine im wesentlichen aufrechte Straßenfahrstellung verschwenkbares Schneidwerk aufweist.

Anbau-Frontmähwerke für Schlepper sind in einer Reihe von
Konstruktionen bekannt und zeichnen sich, im Vergleich zu
Anbau-Seitenmähwerken und Anbau-Heckmähwerken für Schlepper,
dadurch aus, daß der Schlepper beim Mähen nicht über ungemähte Flächen fahren muß und daß der Fahrer des Schleppers
in Verbindung mit einem angehängten Ladewagen zugleich mähen
und aufladen kann, was für das tägliche Grünfutterholen eine
große Arbeitserleichterung darstellt. Als nachteilig an Frontmähwerken
wurde bisher insbesondere empfunden, daß sie vor dem Schlepper relativ
viel Platz beanspruchen und beim Fahren ohne Mähen dort
störend im Wege sind.

Man hat bereits daran gedacht, das Schneidwerk von Anbau-
Frontmähwerken in eine im wesentlichen aufrechte Stellung
verschwenkbar zu machen oder auch mittels geeigneter, gelenkiger Gestaltung der Anbaueinheit näher an die Front
des Schleppers heranbringbar zu machen, um beim Fahren des
Schleppers ohne Mähen, aber mit angebautem Frontmähwerk,
eine Verringerung der Störung durch das vorne angebaute
Frontmähwerk zu erreichen. Die im wesentlichen aufrechte
Stellung des Schneidwerks wird in der vorliegenden Anmeldung als Fahrstellung bezeichnet und in der Praxis dann
eingestellt, wenn der Schlepper eine längere Strecke ohne
Mähen zurücklegt, insbesondere beim Fahren des Schleppers
über öffentliche Straßen und Wege, um hierbei Behinderungen oder gar Gefährdungen weiterer Verkehrsteilnehmer auszuschließen. Die bisherigen Lösungen in dieser Richtung
waren jedoch unbefriedigend, weil auch in der Fahrstellung
des Schneidwerks das Frontmähwerk immer noch wesentlich
über die Front des Schleppers nach vorn hinausragte und weil
das vor der Front des Schleppers nach oben ragende Schneidwerk die Sicht des Schlepperfahrers behinderte und auch als
für andere Verkehrsteilnehmer gefährdend angesehen werden
konnte.

Der Erfindung liegt die Aufgabe zugrunde, ein Anbau-Frontmähwerk zu schaffen, bei dem das Schneidwerk in eine weniger
störende Fahrstellung bringbar ist.

Zur Lösung dieser Aufgabe ist erfindungsgemäß vorgesehen,
daß ein Tragarm der Anbaueinheit, an dessen freiem Ende das
Schneidwerk um eine im wesentlichen horizontale, in Mähfortschrittsrichtung weisende Achse verschwenkbar angebracht
ist, ein Gelenk mit im wesentlichen vertikaler Gelenkachse
aufweist und daß der schneidwerkseitig von dem Gelenk liegende Teil des Tragarms derart um die Gelenkachse nach hinten
schwenkbar ist, daß das im wesentlichen aufrechte Schneidwerk
in eine Fahrstellung seitlich am Schlepper zwischen dessen
Vorder- und Hinterachse kommt.

Diese Fahrstellung seitlich am Schlepper zwischen dessen
Vorder- und Hinterachse ist besonders günstig, da das Schneidwerk vollkommen aus dem besonders störenden Bereich vor dem
Schlepper herausbewegt ist und da zwischen dem Vorderrad und
dem Hinterrad auf einer Seite des Schleppers in der Regel
sowieso ein freier Raum zur Verfügung steht, in den das im
wesentlichen aufrechte Schneidwerk hineinpaßt. Mit der erfindungsgemäßen Frontmähwerkausbildung läßt es sich häufig erreichen, daß in der Fahrstellung weder vorn noch seitlich
ein Teil des Mähwerks wesentlich über die Schlepperkontur
vorsteht.

In der vorliegenden Anmeldung wird der Begriff "Schneidwerk"
in dem Sinne verwendet, daß er alle in Frage kommenden Arten
von Schneidwerken umfaßt, insbesondere Fingerbalken-Schneidwerke und sogenannte Wirbelschneidwerke, die mit rotierenden
Messerscheiben arbeiten.

Es ist zwar an sich bekannt, Anbau-Seitenmähwerke als sog.
Zwischenachsmähwerke am Schlepper zwischen dessen Vorder-
und Hinterachse zu befestigen und dessen Schneidwerk in eine
im wesentlichen aufrechte Fahrstellung verschwenkbar zu gestalten. Hierzu langt eine in Fahrtrichtung des Schleppers
liegende, horizontale Achse, wobei man jedoch die mit Seitenmähwerken verbundenen Nachteile in Kauf nehmen mußte, insbesondere die Notwendigkeit, zuerst das Gras zu mähen und
dann in einem zweiten Arbeitsgang das Grünfutter aufzuladen.
Die Erfindung schafft erstmalig eine kompliziertere Gelenkigkeit eines Mähwerks, um dieses sowohl in der optimalen Arbeitsstellung vor dem Schlepper betreiben als auch in die
optimale Fahrstellung seitlich am Schlepper zwischen dessen
Vorder- und Hinterachse verbringen zu können.

Vorzugsweise hat der Tragarm im wesentlichen eine umgekehrt
U-förmige Gestalt. Diese erlaubt eine Befestigung des Tragarms möglichst weit unten am Schlepper und dennoch eine
freie Schwenkbarkeit nach hinten, wie bei der weiter unten
folgenden Beschreibung eines Ausführungsbeispiels noch deutlicher werden wird. Die Befestigung des Tragarms möglichst
weit unten am Schlepper verbessert die Verhältnisse beim

- 4 -

Auffahren auf ein Hindernis, beispielsweise Erdhügel,
große Steine oder dergleichen, wie ebenfalls weiter unten
noch deutlicher werden wird.

Der Tragarm ist geometrisch so gestaltet, daß er über das
entsprechende Vorderrad hinweg nach hinten geschwenkt werden
kann, wofür sich die umgekehrt U-förmige Gestalt besonders
eignet.

Vorzugsweise ist der Tragarm am Vorderbereich des Schleppers
seitlich befestigt. Dies ist besonders günstig, um in der
Fahrstellung überhaupt keinen Teil der Anbaueinheit mehr
über die Front des Schleppers vorstehen zu haben. Besonders
eignet sich der Bereich zwischen dem Rahmen und einem Vorderrad des Schleppers zur Anbringung des erfindungsgemäßen
Frontmähwerks. Es ist jedoch auch möglich, das erfindungsgemäße Frontmähwerk an einer vor dem Motor des Schleppers
liegenden Stelle an diesem zu befestigen.

Es ist als günstig bevorzugt, wenn der Tragarm an seiner Befestigungsstelle am Schlepper um eine im wesentlichen horizontale Achse schwenkbar ist. Eine derartige Schwenkbarkeit
wird zwar in aller Regel für das Verbringen des Schneidwerks aus der Arbeitsstellung in die Fahrstellung nicht
benötigt. Es ist aber häufig günstig, neben der Arbeitsstellung und der Fahrstellung eine Stellung mit, wenn auch
häufig nur um eine relativ kleine Strecke, angehobenem
Schneidwerk zu haben. Mit dem Schneidwerk in dieser Anhebestellung kann man beispielsweise von einer ersten gemähten Fläche zu einer nicht weit entfernten, zweiten, zu
mähenden Fläche fahren, das Schneidwerk inspizieren und
dergleichen. Vorzugsweise ist der Tragarm in der Anhebestellung des Schneidwerks verriegelbar.

In bevorzugter Ausgestaltung der Erfindung ist der Tragarm
mit dem Schneidwerk in der Arbeitsstellung durch Federkraft mindestens teilweise ausbalanciert. Auf diese Weise hat
man die Möglichkeit, statt eines starren Anschlusses des
Tragarms am Schlepper einen gegen Federkraft beweglichen
Anschluß vorzusehen, so daß der Bodendruck durch das Gewicht der Anschlußeinheit und des Schneidwerks vermindert
wird und ein insbesondere bei feuchtem Boden zu befürchtendes Eindrücken des Schneidwerks in den Boden verhindert wird.
Für diesen beweglichen Anschluß eignet sich besonders die vorstehend beschriebene, horizontale Schwenkachse. Die Ausbalancierungsfeder ist vorzugsweise eine Spiralfeder, die im
Bereich dieser horizontalen Schwenkachse angeordnet ist.

Vorzugsweise ist der Anstellwinkel des Schneidwerks relativ
zur Horizontalen einstellbar, wodurch eine Anpassungsmöglichkeit an unterschiedliche Mähbedingungen geschaffen ist.
Diese Einstellbarkeit des Anstellwinkels ist vorzugsweise
in demjenigen Bereich vorgesehen, in dem das Schneidwerk
am Tragarm angeschlossen ist.

In bevorzugter Ausgestaltung der Erfindung ist eine Auffahrsicherung vorgesehen, die ein Ausweichen des Schneidwerks
beim Auffahren auf ein Hindernis, beispielsweise einen Erdhügel, einen größeren Stein und dergleichen, ermöglicht.
Eine derartige Auffahrsicherung hat den Hauptzweck, Schäden
am Schneidwerk beim Auffahren auf ein Hindernis zu vermeiden
oder möglichst klein zu halten und zu verhindern, daß beim
Auffahren des Schneidwerks auf ein Hindernis das Schneidwerk
mit unverminderter Vortriebskraft des Schleppers weiter gegen
das Hindernis gefahren wird. Das Ausweichen des Schneidwerks
soll am besten so erfolgen, daß das Schneidwerk ausweichend
über das Hindernis hinweggeführt wird oder der Fahrer Zeit
gewinnt, den Schlepper zum Stehen zu bringen. Geeignete techsche Mittel zur Ermöglichung der Ausweichbewegung sind insbesondere Federn an geeigneter Stelle, Scherstifte an geeigneter Stelle und dergleichen. Vorzugsweise ist die Konstruktion so ausgelegt, daß die Ausweichbewegung schwenkend um ein geeignetes Gelenk erfolgt. Hierfür eignen sich insbesondere ein im wesentlichen horizontales, quer zur Mähfortschrittsrichtung verlaufendes Gelenk an passender Stelle des Tragarms und/oder ein im wesentlichen vertikales, beispielsweise im Bereich des Anschlusses des Schneidwerks am Tragarm gelegenes, Gelenk, um das das Schneidwerk relativ zum Tragarm schwenkbar ist.

Der eigentliche Antrieb des Schneidwerks für die Schneidbewegung gestaltet sich konstruktiv besonders einfach, wenn er als Hydraulikantrieb ausgebildet ist.

Die Erfindung und Weiterbildungen der Erfindung werden im folgenden anhand eines zeichnerisch dargestellten Ausführungsbeispiels noch näher erläutert. Es zeigen:

Fig.1    eine perspektivische Ansicht von vorn/seitlich eines Anbau-Frontmähwerks, befestigt an einem Schlepper;

Fig.2    eine detailliertere Seitenansicht des Tragarms des Anbau-Frontmähwerks in größerem Maßstab;

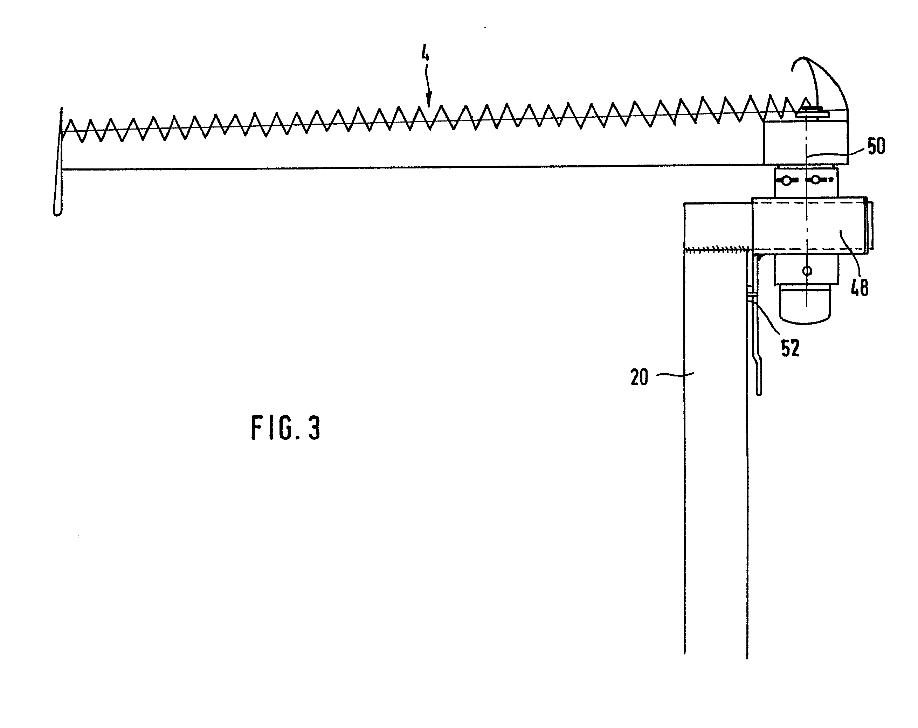

Fig.3    eine Draufsicht des Schneidwerks des Anbau-Frontmähwerks und des Anschlusses des Schneidwerks an den Tragarm.

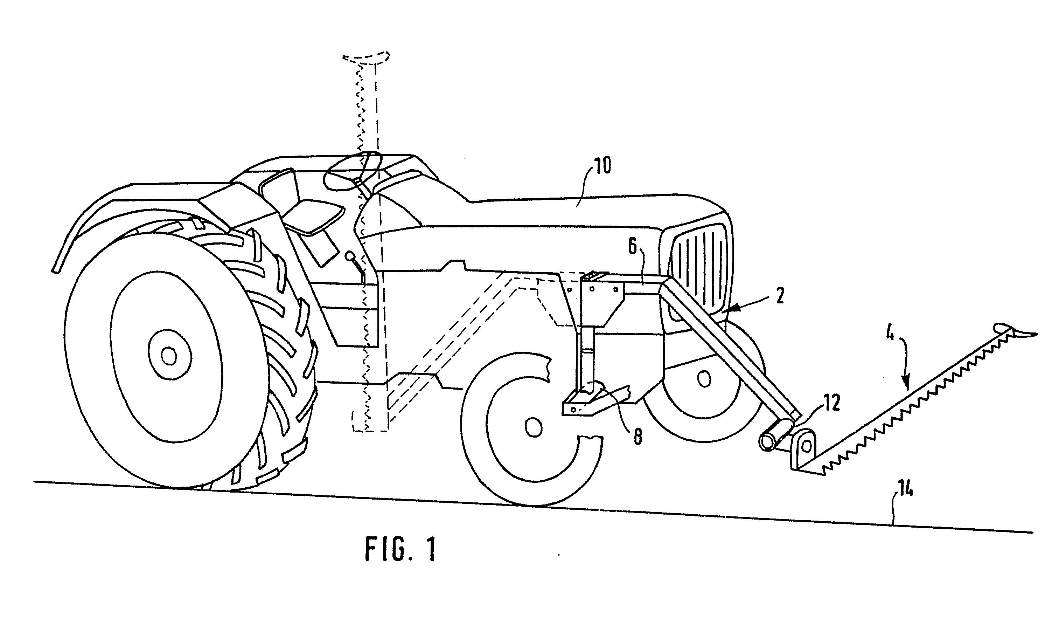

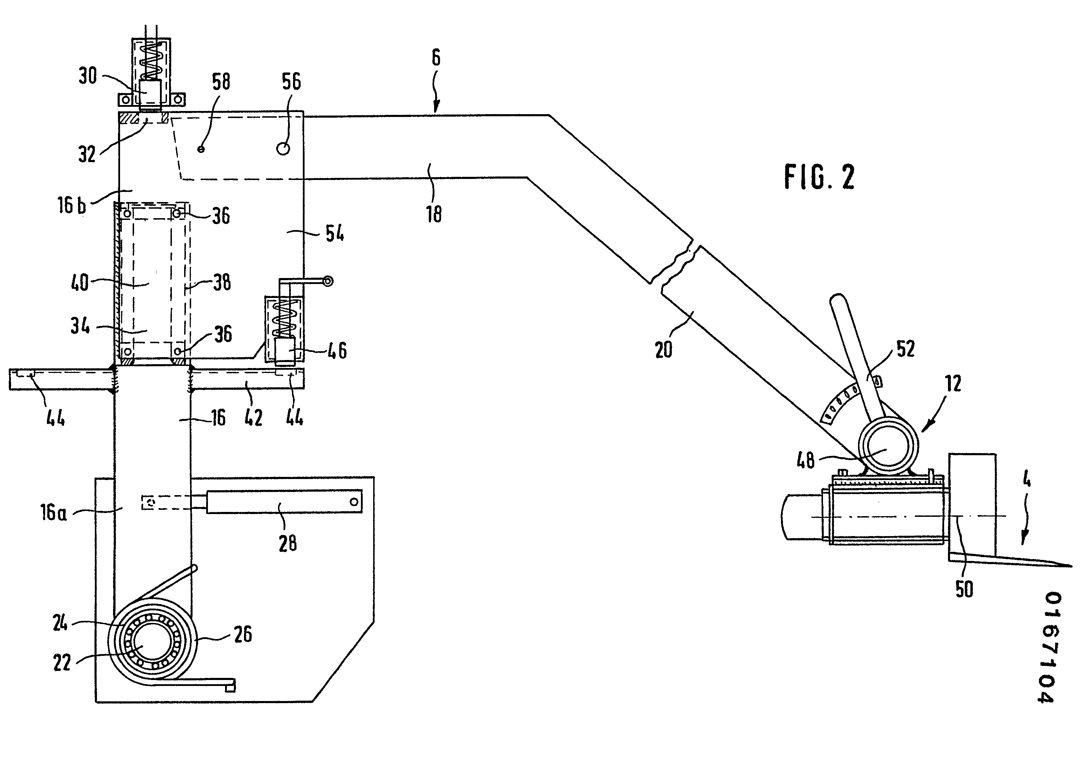

Man erkennt in Fig.1, daß das Anbau-Frontmähwerk im wesentlichen aus einer Anbaueinheit 2 und einem Schneidwerk 4, das als Fingerbalken-Schneidwerk ausgebildet ist, besteht. Die Anbaueinheit 2 besteht im wesentlichen aus einem Tragarm 6, dessen Anschluß 8 am Schlepper 10 und dem Anschlußbereich 12, an dem das Schneidwerk 4 am Tragarm 6 befestigt ist. Der Tragarm 6 ist, grob gesprochen, umgekehrt U-förmig. Die Fig. 1 und 2 geben die Anhebestellung des Schneidwerks 4 wieder, in der das Schneidwerk 4 ein Stück über den Erdboden 14 angehoben ist, aber sich quer vor dem Schlepper 10 befindet. In dieser Anhebestellung weist der Tragarm einen hinteren, praktisch vertikalen Bereich 16, der vom Anschluß 8 nach oben führt, einen vom oberen Ende des vertikalen Bereichs 16 nach vorn führenden, praktisch horizontalen Bereich 18 sowie einen vom vorderen Ende des horizontalen Bereichs 18 schräg nach unten zum Anschlußbereich 12 führenden Schrägbereich 20 auf.

In der nicht gezeichneten Draufsicht ist das Schneidwerk
4 etwas breiter als der Schlepper 10. Der Rahmen bzw. der
Vorderachslagerbock des Schleppers 10 ist wesentlich schmaler als die Spurweite des Schleppers 10. Der Anschluß 8 ist
als waagerechter, nach vorn und hinten abgestrebter Bolzen
22 ausgebildet, der sich an der rechten Vorderseite des
Rahmens des Schleppers 10 im Raum zwischen dem Rahmen und
dem rechten Vorderrad nach außen erstreckt und um den eine
den Vertikalbereich 16 des Tragarms 6 tragende Büchse 24,
beispielsweise der Außenring eines Kugellagers, schwenkbar
ist. Auf die rechte Seite des Schleppers 10 gesehen, ist der Vertikalbereich 16 einschließlich Büchse 24 durch eine kräftige Spiralfeder 26 gegen den Uhrzeigersinn federbeaufschlagt. Die
Spiralfeder 26 stützt sich mit einem Ende am Schlepper 10
und mit dem anderen Ende am Vertikalbereich 16 ab und ist
den Bolzen 22 sowie die Büchse 24 umgebend angeordnet. Der
Tragarm 6 liegt, insgesamt gesehen, in einer sich schräg
zur Fahrtrichtung des Schleppers 10 erstreckenden Ebene,
führt also vom Anschluß 8 schräg nach vorne außen. Ein Stück
entfernt von der Büchse 24 ist zwischen dem Vertikalbereich
16 und einer geeigneten Befestigungsstelle am Schlepper 10
eine Zylinder-Kolben-Einheit 28 vorgesehen, mit der der Trag
arm 6 in der Sicht der Fig.2 gegen den Uhrzeigersinn verschwenkt werden kann, um das Schneidwerk aus der Arbeitsstellung in die Anhebestellung zu bewegen. In der Anhebestellung kann ein federbeaufschlagter Sicherungsbolzen 30
in eine entsprechende Bohrung 32 am oberen Ende des Vertikal
bereichs 16 einrasten.

Der Vertikalbereich 16 des Tragarms 6 ist in eine untere
Hälfte 16a und eine obere Hälfte 16b unterteilt. Die beiden
Hälften 16a und 16b sind dadurch verbunden, daß die untere Hälfte 16a am oberen Ende einen vertikalen Fortsatz 34
aufweist, der unter Zwischenschaltung von Kugellagern
36 in einer entsprechenden, vertikalen, länglichen, unten
offenen Aufnahmeöffnung 38 der oberen Hälfte 16b gelagert
ist. Auf diese Weise ist ein Gelenk 40 mit vertikaler
Gelenkachse gebildet, um die der restliche Teil des Tragarms 6 um die untere Hälfte 16a des vertikalen Bereichs
16 geschwenkt werden kann. An der unteren Hälfte 16a ist
eine horizontale Platte 42 mit zwei um etwa 180° versetzten,
vertikalen Bohrungen 44 angeschweißt, in die ein federbeaufschlagter Sicherungsbolzen 46 einrastbar ist.

Am Anschlußbereich 12 vorn am Tragarm ist zunächst am vorderen Ende des Schrägbereichs 12 ein Gelenk 48 mit horizontaler Achse quer zur Fahrtrichtung des Schleppers 10 angeordnet. An einem Gelenkteil ist dann ein weiteres Gelenk
50 mit horizontaler, in Fahrtrichtung des Schleppers 10
liegender Gelenkachse befestigt. Hieran ist das Schneidwerk 4 mit seinem in Fahrtrichtung des Schleppers 10 bzw.
in Mähfortschrittsrichtung gesehen rechten Endbereich befestigt. Mittels des Gelenks 50 ist das Schneidwerk 4 aus
der gezeichneten, horizontalen Stellung in eine im wesentlichen vertikale Stellung schwenkbar, in der es vom Gelenk
50 aus im wesentlichen senkrecht nach oben ragt. Mittels
des Gelenks 48 ist der Anstellwinkel des Schneidwerks 4
relativ zum Boden bzw. relativ zum Mähgut einstellbar,
und zwar mittels einer mehrstufigen Rasteinrichtung 52.
Dem Gelenk 50 kann eine Rasteinrichtung zugeordnet sein,
die die Horizontalstellung sowie die Aufrechtstellung des
Schneidwerks 4 definiert.

Wenn vorstehend von einer vertikalen Lage des Vertikalbereichs 16 des Tragarms 6 und von einer horizontalen Lage der Achse des Gelenks 50 die Rede war, dann bezog sich
das auf die in Fig.1 und 2 gezeichnete Anhebestellung des
Frontmähwerks. Wenn in der Blickrichtung der Fig.2, also
von rechts auf den Schlepper 10 mit angebautem Frontmähwerk, der Tragarm 6 mit vorne daran befestigtem Schneidwerk 4 im Uhrzeigersinn in die Arbeitsstellung verschwenkt
wird, also eine Stellung, in der sich das Schneidwerk 4
dicht oberhalb des Erdbodens 14 befindet, dann kommt der
Vertikalbereich 16 in eine leicht schräggestellte Lage.
Außerdem hängt selbstverständlich die exakte Lage der Achse
des Gelenks 50 sowohl von der geschilderten Schwenkstellung
des Vertikalbereichs 16 des Tragarms 6 als auch von der
gewählten Anstellwinkel-Einstellung mittels des Gelenks
48 ab.

Ein Hydraulikmotor zum Antrieb der Schneidbewegung des
Schneidwerks 4 ist nicht detailliert eingezeichnet, er kann
beispielsweise im Bereich desjenigen Endes des Schneidwerks
angeordnet sein, der am Anschlußbereich 12 des Tragarms 6
befestigt ist.

Betrieblich wird mit dem Anbau-Frontmähwerk folgendermaßen
umgegangen:

In der nicht gezeichneten Arbeitsstellung ist das Schneidwerk 4 weiter  zum Erdboden 14 hin abgesenkt als gezeichnet.
Der Verriegelungsbolzen 30 ist nicht eingerastet. Der Verriegelungsbolzen 46 ist in die vordere Bohrung 44 eingerastet. Das gesamte Gewicht des Tragarms 6 mit daran befestigtem Schneidwerk 4 ist durch die Spiralfeder 26
teilweise ausbalanciert.  Nach Beendigung des Mähens wird der Tragarm 6 mit daran befestigtem
Schneidwerk 4 gegen den Uhrzeigersinn in Fig.2 mittels der
Zylinder-Kolben-Einheit 28 verschwenkt; der Verriegelungsbolzen 30 rastet ein; hiermit ist die gezeichnete Anhebestellung erreicht. Jetzt wird das Schneidwerk 4 um die
Achse des Gelenks 50 nach oben geschwenkt, so daß es eine
im wesentlichen vertikale Stellung einnimmt. Jetzt wird
der Verriegelungsbolzen 46 gelöst und wird der aus oberer
Hälfte 16b, Horizontalbereich 18 und Schrägbereich 20 bestehende Teil des Tragarms 6 mitsamt dem Schneidwerk 4
um das Gelenk 40 um etwa 180° nach hinten geschwenkt, bis
der Verriegelungsbolzen 46 in die hintere der Bohrungen
44 einrastet. Die geometrischen Abmessungen sind derart,
daß sich jetzt das Schneidwerk 4 in einer Fahrstellung
rechts seitlich am Schlepper zwischen dessen Vorder- und
Hinterachse befindet, wie in Fig.1 gestrichelt eingezeichnet. Um das Schneidwerk aus der Fahrstellung in die Arbeitsstellung zu bringen, wird umgekehrt vorgegangen.

Man erkennt in Fig.1, daß der Bolzen 22 des Anschlusses 8
möglichst weit unten vom Rahmen des Schleppers 10 horizontal
nach außen ragt. Konkret liegt der Bolzen 22 etwas höher
und etwas weiter vorn als die Achse des rechten Vorderrads
des Schleppers 10. Es ist aber auch möglich, den Anschlußbereich 8 nicht seitlich sondern vorne am Rahmen des Schleppers 10 vorzusehen. Lage des Anschlußbereichs 8 und Geometrie des Tragarms 6 müssen dann selbstverständlich so ausgelegt werden, daß nach wie vor die erfindungsgemäße Verschwenkung um die im wesentlichen vertikale Achse des Gelenks 40 zur Verbringung des Schneidwerks 4 in die Fahrstellung möglich ist. Auch eine gekröpfte Ausbildung des
Vertikalbereichs 16 des Tragarms 6 ist möglich. Außerdem ist es möglich, das erfindungsgemäße Verschwenkgelenk mit im wesentlichen vertikaler Achse nicht in den Vertikalbereich 16, sondern in den Horizontalbereich 18 oder sogar den Schrägbereich 20 des Tragarms 6 zu legen.

Die in bevorzugter Ausgestaltung der Erfindung vorgesehene Auffahrsicherung ist nur andeutungsweise eingezeichnet. Man erkennt in Fig.2, daß der Horizontalbereich 18 des Tragarms 6 zwischen zwei Eckblechen 54 zwischen dem Vertikalbereich 16 und dem Horizontalbereich 18 aufgenommen ist, und zwar schwenkbar um einen Bolzen 56 mit horizontaler Achse quer zur Fahrtrichtung des Schleppers 10. Ein Stück entfernt vom Bolzen 56 befindet sich achsparallel zu diesem ein Scherstift 58 durch die Eckbleche 54 und den Horizontalbereich 18 des Tragarms 6.Beim Auffahren auf ein Hindernis wird der Scherstift 58 abgeschert; der Horizontalbereich 18 und der Schrägbereich 20 des Tragarms 6 bewegen sich schwenkend im Uhrzeigersinn, und der Vertikalbereich 16 bewegt sich, sogar noch unterstützt durch die Spiralfeder 26, gegen den Uhrzeigersinn nach hinten. Auf diese Weise weicht das Schneidwerk 4 nach hinten-oben aus. Ferner kann, beispielsweise angeordnet im Anschlußbereich 12, ein Gelenk mit im wesentlichen vertikaler Achse für schwenkende Ausweichbewegungen des Schneidwerks 4 vorgesehen sein. Diese Möglichkeit ist besonders beim Auffahren auf Hindernisse im Bereich des in Fahrtrichtung gesehen linken, freien Endes des Schneidwerks 4 günstig. Jede der geschilderten Möglichkeiten kann einzeln oder zusammen mit der anderen verwirklicht sein. Statt des Scherstiftes 58 kann eine Feder vorgesehen sein. Für das beschriebene Ausweichgelenk im Anschlußbereich 12 können ebenfalls Scherstift und/oder Feder vorgesehen sein.

K 22 802 K/8ba                          26.Juni 1985


Hans Peter Hartmann
8459 Lehendorf 19, BRD


"Anbau-Frontmähwerk für Schlepper"

*1*

A n s p r ü c h e


1.    Anbau-Frontmähwerk für Schlepper, das eine Anbaueinheit zur Anbringung am Schlepper sowie ein aus einer
Arbeitsstellung in eine im wesentlichen aufrechte Fahrstellung verschwenkbares Schneidwerk aufweist,
dadurch  g e k e n n z e i c h n e t , daß ein Tragarm
der Anbaueinheit, an dessen freiem Ende das Schneidwerk
um eine im wesentlichen horizontale, in Mähfortschrittsrichtung weisende Achse verschwenkbar angebracht ist, ein
Gelenk mit im wesentlichen vertikaler Gelenkachse aufweist;
und daß der schneidwerkseitig von dem Gelenk liegende Teil
des Tragarms derart um die Gelenkachse nach hinten schwenkbar ist, daß das im wesentlichen aufrechte Schneidwerk in
eine Fahrstellung seitlich am Schlepper zwischen dessen Vorder-und Hinterachse kommt.

2.     Anbau-Frontmähwerk nach Anspruch 1, dadurch gekennzeichnet, daß der Tragarm im wesentlichen eine umgekehrt U-förmige Gestalt hat.

3.     Anbau-Frontmähwerk nach Anspruch 1 oder 2, dadurch gekennzeichnet, daß der Tragarm am Vorderbereich des Schleppers seitlich befestigt ist.

4.     Anbau-Frontmähwerk nach Anspruch 3, dadurch gekennzeichnet, daß der Tragarm möglichst weit unten am Schlepper befestigt ist.

5.     Anbau-Frontmähwerk nach einem der Ansprüche 1 bis 4, dadurch gekennzeichnet, daß der Tragarm an seiner Befestigungsstelle am Schlepper um eine im wesentlichen horizontale Achse schwenkbar ist.

6.     Anbau-Frontmähwerk nach Anspruch 5, dadurch gekennzeichnet, daß der Tragarm in einer aufwärts geschwenkten Anhebestellung verriegelbar ist.

7.     Anbau-Frontmähwerk nach einem der Ansprüche 1 bis 6, dadurch gekennzeichnet, daß der Tragarm mit dem Schneidwerk in der Arbeitsstellung durch Federkraft entlastet ist.

8.     Anbau-Frontmähwerk nach einem der Ansprüche 1 bis 7, dadurch gekennzeichnet, daß der Anstellwinkel des Schneidwerks relativ zur Horizontalen einstellbar ist.

9.     Anbau-Frontmähwerk nach einem der Ansprüche 1 bis 8, gekennzeichnet durch eine Auffahrsicherung, die ein Ausweichen des Schneidwerks beim Auffahren auf ein Hindernis
ermöglicht.

10. Anbau-Frontmähwerk nach Anspruch 9, dadurch gekennzeichnet, daß die Auffahrsicherung ein im wesentlichen
horizontales Gelenk des Tragarms aufweist.

11. Anbau-Frontmähwerk nach Anspruch 9 oder 10, dadurch
gekennzeichnet, daß die Auffahrsicherung ein im wesentlichen
vertikales Gelenk, um das das Schneidwerk relativ zum Tragarm schwenkbar ist, aufweist.

12. Anbau-Frontmähwerk nach einem der Ansprüche 1 bis
11, dadurch gekennzeichnet, daß das Schneidwerk mit einem
Hydraulikantrieb ausgerüstet ist.

FIG. 1

0167104

FIG. 2

FIG. 3

0167104

# EUROPÄISCHER RECHERCHENBERICHT

## EINSCHLÄGIGE DOKUMENTE

EP 85107909.5

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | DE – A – 1 582 310 (MORTENSEN,EGIL)<br>* Gesamt *<br>-- | 1,9 | A 01 D 34/00<br>A 01 D 34/24<br>A 01 D 34/60 |
| Y | DE – A1 – 3 106 929 (BUSATIS-WERK GMBH & CO.KG)<br>* Gesamt *<br>-- | 1,9 | |
| A | DE – B – 1 215 996 (BAYERISCHE PFLUGFABRIK GMBH)<br>* Gesamt *<br>-- | 1,3,4,5 | |
| A | AT – B – 290 899 (BUCHER-GUYER AG MASCHINENFABRIK)<br>* Gesamt *<br>-- | 1,9,12 | |
| A | US – A – 3 262 254 (CORNELIS VAN DER LELY)<br>* Gesamt *<br>-- | 1 | **RECHERCHIERTE SACHGEBIETE (Int. Cl 4)**<br><br>A 01 D 34/00<br>A 01 D 90/00 |
| A | GB – A – 614 374 (STANLEY GUSTAV DEHN, M.A.)<br>* Gesamt *<br>---- | 1,11 | |

Der vorliegende Recherchenbericht wurde für alle Patentansprüche erstellt.

| Recherchenort | Abschlußdatum der Recherche | Prüfer |
|---|---|---|
| WIEN | 30-09-1985 | MENTLER |